# FASCICULE DE BREVET EUROPEEN

(11) **EP 4 303 042 B1**
(45) Date de publication et mention de la délivrance du brevet: **15.04.2026**
(21) Numéro de dépôt: 23182082.0
(22) Date de dépôt: 28.06.2023
(51) Int. Cl.: B60G 15/06, B62D 25/08

(54) **ASSEMBLAGE DE BUTEE SUPÉRIEURE D'UNE JAMBE DE SUSPENSION DE VEHICULE AUTOMOBILE, ET JAMBE DE SUSPENSION COMPORTANT UN TEL ASSEMBLAGE**
OBERE ANSCHLAGANORDNUNG FÜR EIN FEDERBEIN EINES KRAFTFAHRZEUGS UND FEDERBEIN MIT EINER SOLCHEN ANORDNUNG
UPPER STOP ASSEMBLY FOR A MOTOR VEHICLE SUSPENSION STRUT, AND SUSPENSION STRUT COMPRISING SUCH AN ASSEMBLY

(30) Priorité: 07.07.2022 FR 2206987
(43) Date de publication de la demande: 10.01.2024
(73) Titulaire: NTN Europe, 74000 Annecy (FR)
(72) Inventeur: BAUDU, Alexandre, 74010 Annecy Cedex (FR); POURROY-SOLARI, Vincent, 74230 THONES (FR)
(74) Mandataire: Alatis

(56) Documents cités:
- EP-A1- 2 428 697
- EP-A1- 4 015 262
- EP-A2- 1 564 037
- WO-A2-2019/155149
- DE-A1- 102014 218 800
- FR-A1- 3 112 101
- JP-A- 2010 014 133

## Description

### DOMAINE TECHNIQUE DE L'INVENTION

L'invention concerne, de façon générale, le domaine technique des suspensions de véhicules automobile.

L'invention se rapporte plus spécifiquement à un assemblage de butée supérieure d'une suspension de véhicule automobile comportant un sous-ensemble filtrant, et à une jambe de suspension intégrant un tel assemblage de butée.

### ÉTAT DE LA TECHNIQUE ANTÉRIEURE

Les jambes de suspension de véhicule automobile comportant un ressort hélicoïdal enroulé autour d'un amortisseur télescopique sont liées à la caisse du véhicule au niveau d'une interface multifonctionnelle, dite butée supérieure de suspension, qui intègre notamment des fonctions de fixation à la caisse, de guidage en rotation de l'extrémité supérieure du ressort hélicoïdal et/ou de la jambe de suspension lors de la rotation lors du braquage des roues, de maintien de la tige de l'amortisseur télescopique, le cas échéant avec une filtration vibratoire, et d'appui d'un tampon de chocs en fin de course du corps de l'amortisseur télescopique. Une telle butée requiert un nombre important de pièces, dont certaines peuvent être préassemblées avant le montage sur le véhicule, et d'autres doivent être assemblée au moment de la fixation au véhicule.

Un exemple d'une butée supérieure de jambe de suspension du type précédent est donné par le document EP1591691A1. Cette butée comporte un palier à roulement comportant une rondelle supérieure, une rondelle inférieure et des billes circulant sur des chemins de roulement formés sur les rondelles supérieure et inférieure, ainsi qu'une pièce multifonction rigide constituée par une tôle emboutie et un bloc filtrant élastomère positionnée entre la rondelle supérieure et la pièce multifonction. La pièce multifonction comporte une pluralité de trous de fixation, chacun débouchant sur une paroi d'appui tournée vers le bas. Des écrous sont soudés à la pièce multifonction au niveau des parois d'appui, dans le prolongement des trous de fixation. Il est ainsi possible de fixer la butée supérieure à la caisse du véhicule à l'aide de vis qui traversent les trous de fixation et viennent se visser dans les écrous. Avant son montage sur le véhicule, la butée ne forme pas un tout cohérent. Des précautions doivent en outre être prises pour protéger la pièce multifonction métallique contre la corrosion.

L'assemblage de butée supérieur de jambe de suspension illustré dans le document DE 10 2009 059 168 A1 diffère du précédent notamment par le fait que la pièce multifonction est réalisée en matériau plastique moulé et présente au niveau des trous de fixation des inserts métalliques taraudés. Une telle pièce est potentiellement plus légère qu'une pièce en tôle, et est relativement insensible à la corrosion, excepté au niveau des inserts métalliques. La fabrication de la pièce multifonction dans un moule d'injection avec ses inserts métalliques surmoulés entraîne en pratique une faible résistance du plastique vis-à-vis des efforts de butée de choc.

Le document FR 3 112 101 A1, qui montre le préambule de la revendication 1, décrit un assemblage de butée supérieure de jambe de suspension qui minimise les étapes de montage final sur le véhicule, mais reste compatible avec des cadences de production élevées. Cette configuration est offerte grâce à des interfaces de fixation sur la pièce multifonction comprenant chacune une fente de fixation ouverte sur une paroi périphérique sur la pièce multifonction et chacune configurée pour recevoir une portion au moins d'un élément de fixation dans une direction inclinée par rapport à l'axe de fixation de la tige, la disposition des fentes garantissant que les éléments de fixation ne s'échapperont pas des fentes lors du montage. La configuration décrite dans ce document permet d'éviter une étape de fixation à demeure des éléments de fixation à la pièce multifonction, notamment par soudage ou surmoulage, avant le montage sur le véhicule.

Dans le document JP2010014133 est décrit un sous-ensemble filtrant pour une jambe de suspension non directrice de véhicule automobile, qui comprend un bloc filtrant précontraint entre un support inférieur et un couvercle, ainsi que des éléments de fixation traversant le support inférieur et le couvercle pour assurer d'une part la fixation du support inférieur au couvercle et la précontrainte du bloc filtrant avant montage sur le véhicule, puis la fixation de l'assemblage à un élément de caisse de véhicule automobile. Un tel dispositif nécessite des goujons de fixation à double fonction, dont la tête forme un rivet pour fixer le support inférieur au couvercle, et dont le corps présente un filetage pour un écrou positionné du côté supérieur de l'élément de caisse du véhicule. Cette architecture n'est pas adaptée à une jambe de suspension pour roue directrice qui nécessite un palier lisse ou à roulement interposé entre le sous-ensemble filtrant et le ressort de la jambe de suspension.

Un montage similaire est proposé dans le document EP1564037A2, mais avec pour éléments de fixation de simples vis, qui ne permettent une mise en charge du bloc filtrant qu'au moment de la fixation de l'assemblage au véhicule.

Dans le document DE102014218800A1 est divulgué un sous-ensemble filtrant pour une jambe de suspension de véhicule automobile, qui comprend un bloc filtrant disposé sans précontrainte entre un support inférieur et un couvercle, ainsi que des éléments de fixation par encliquetage entre le support inférieur et le couvercle, et des vis de fixation pour la fixation du couvercle à un élément de caisse de véhicule. Ce dispositif n'est toutefois pas conçu pour intégrer un palier.

Les documents EP 2 428 697 A1 et WO 2019/155149 A2 montrent d'autres assemblages de butée supérieure d'une jambe de suspension de véhicule automobile.

### EXPOSE DE L'INVENTION

L'invention vise à proposer un assemblage de butée supérieure d'une jambe de suspension de véhicule automobile, comportant un palier lisse ou à roulement et un sous-ensemble filtrant dont le bloc filtrant puisse être précontraint avant montage sur le véhicule.

Pour ce faire est proposé, selon un premier aspect de l'invention, un assemblage de butée supérieure d'une jambe de suspension de véhicule automobile, l'assemblage comportant : un palier lisse ou à roulement et un sous-ensemble filtrant, en appui direct ou indirect contre le palier, le palier définissant un axe de rotation, le sous-ensemble filtrant comportant :
- un support de palier annulaire formant une face d'appui pour un ressort hélicoïdal, la face d'appui étant tournée à l'opposé du palier;
- un bloc filtrant en matière élastomère, le bloc filtrant s'étendant suivant un axe de référence et présentant une interface de solidarisation d'une extrémité d'une tige d'un amortisseur de la jambe de suspension ;
   - un support inférieur de bloc filtrant situé entre le bloc filtrant et le palier et présentant une portion centrale annulaire en appui contre une face inférieure du bloc filtrant et traversée axialement par un passage pour l'extrémité de la tige d'amortisseur, le support inférieur de bloc filtrant présentant une portion périphérique annulaire entourant la portion centrale, le support inférieur de bloc filtrant présentant en outre une face supérieure tournée vers le bloc filtrant et une face inférieure opposée d'appui pour un tampon de choc de la suspension ;
   - un couvercle de bloc filtrant comportant une portion centrale en appui contre une face supérieure du bloc filtrant, une portion périphérique entourant la portion centrale et en appui contre la portion périphérique annulaire du support inférieur, la portion périphérique du couvercle étant pourvue d'ouvertures de fixation disposées radialement à l'extérieur du palier et configurées pour fixer le sous-ensemble filtrant à un élément de caisse du véhicule automobile, le couvercle de bloc filtrant formant une jupe extérieure de protection située radialement à l'extérieur et au moins partiellement en regard d'une face périphérique extérieure du support de palier pour délimiter un chicanage d'étanchéité ; et
   - des moyens de fixation assurant la fixation du couvercle avec le support inférieur de bloc filtrant indépendamment des ouvertures de fixation, le bloc filtrant étant en précharge entre le support inférieur et le couvercle de bloc filtrant.

L'assemblage permet la fixation du couvercle au support inférieur par les moyens de fixation indépendamment de la fixation du couvercle à la caisse du véhicule, qui fait appel à des éléments de fixation insérés dans les ouvertures de fixation. Le positionnement des ouvertures de fixation à l'extérieur du palier libère un volume qui permet d'accueillir le palier.

De préférence, les ouvertures de fixation étant disposées radialement à l'extérieur du support inférieur de bloc filtrant.

Selon un mode de réalisation, le support inférieur de bloc filtrant présente :
- une jupe cylindrique configurée pour venir se loger de façon ajustée avec une portion cylindrique d'une pièce de support intermédiaire ou d'un palier de l'assemblage ; et
- un épaulement transversal extérieur pour venir en appui contre une face supérieure de ladite pièce de support intermédiaire ou du palier de l'assemblage.

Selon un mode de réalisation, le support inférieur de bloc filtrant est monobloc et métallique.

Selon un mode de réalisation, le couvercle de bloc filtrant est en matériau(x) plastique(s), le cas échéant avec des renforts ou inserts.

Selon un mode de réalisation, les moyens de fixation pour assurer la fixation du couvercle avec le support inférieur de bloc filtrant comprennent :
- au moins un rabat de fixation du support inférieur faisant saillie de la portion périphérique annulaire du support inférieur ; et
- au moins un orifice de fixation sur la portion périphérique du couvercle associé au rabat de fixation du support inférieur et traversé par une portion proximale du rabat de fixation associé suivant une direction axiale, une portion distale du rabat de fixation associé s'étendant au moins suivant une composante perpendiculaire à la direction axiale en recouvrement avec une surface d'appui d'un côté du couvercle opposé à la portion périphérique du support inférieur pour assurer la fixation du couvercle avec le support inférieur de bloc filtrant.

Selon un mode de réalisation, chaque rabat de fixation des moyens de fixation pour assurer la fixation du couvercle avec le support inférieur de bloc filtrant est serti contre le couvercle du côté du couvercle opposé au bloc filtrant pour assurer la fixation du couvercle avec le support inférieur de bloc filtrant. Ainsi on obtient des rabats de fixation dont la portion distale est coudée par rapport à la portion proximale, ce coude étant obtenu par un procédé de sertissage. De préférence, en cas de pluralité de rabats de fixation, l'ensemble des rabats de fixation est serti.

Alternativement, et selon un autre mode de réalisation, les moyens de fixation pour assurer la fixation du couvercle avec le support inférieur de bloc filtrant comportent une rondelle de verrouillage, un premier élément parmi le support inférieur et le couvercle étant situé axialement entre la rondelle de verrouillage et un second élément parmi le support inférieur et le couvercle, des rabats et des encoches étant formés sur la rondelle de verrouillage et le deuxième élément, chacun des rabats formé sur une pièce parmi la rondelle de verrouillage et le deuxième élément étant associé à une des encoches, formée sur une autre pièce parmi la rondelle de verrouillage et le deuxième élément, la rondelle de verrouillage étant mobile par rapport au second élément entre :
- une position relative d'approche et une position relative d'interpénétration par mouvement relatif de translation entre la rondelle de verrouillage et le second élément suivant l'axe de référence de telle sorte que, dans la position relative d'interpénétration, chacun des rabats de fixation pénètre dans l'encoche associée,
- la position relative d'interpénétration et une position relative d'assemblage par mouvement relatif de rotation entre la rondelle de verrouillage et le deuxième élément autour de l'axe de référence de façon telle que dans la position relative d'assemblage, chacun des rabats de fixation est logé dans un prolongement circonférentiel de l'encoche associée et s'y trouve retenu axialement en appui axial contre un rebord de l'encoche associée.

Selon un mode de réalisation, les moyens de fixation pour assurer la fixation du couvercle avec le support inférieur de bloc filtrant comprennent au moins une fixation par filetage.

Selon un mode de réalisation, la portion périphérique entoure le support inférieur.

L'axe de rotation défini par le palier peut être sécant avec l'axe de référence, ou parallèle à l'axe de référence, en particulier confondu avec l'axe de référence.

Selon un mode de réalisation, l'assemblage de butée supérieure comporte une pièce de support intermédiaire rigide en appui sur le palier et formant un berceau de support supportant le sous-ensemble filtrant.

Selon un mode de réalisation, la pièce de support intermédiaire et le support de palier délimitent ensemble au moins en partie un volume annulaire pour le palier.

Selon l'invention, le couvercle de bloc filtrant forme une jupe extérieure de protection située radialement à l'extérieur et au moins partiellement en regard d'une face périphérique extérieure du support de palier pour délimiter un chicanage d'étanchéité. De préférence, le chicanage assure un accrochage élastique de cohésion entre le support de palier et le couvercle avant montage sur l'élément de caisse du véhicule automobile.

Selon un mode de réalisation, la pièce de support intermédiaire ou le support de palier comporte une jupe intérieure positionnée radialement à l'intérieur du palier, la jupe intérieure comportant de préférence une forme d'accrochage pour une extrémité supérieure du tampon de choc.

L'invention concerne également une jambe de suspension pour un véhicule automobile, comportant un ressort hélicoïdal, un amortisseur télescopique, et un tampon de choc, remarquable en ce qu'elle comporte en outre un assemblage de butée supérieure tel que décrit ci-avant.

### BRÈVE DESCRIPTION DES FIGURES

D'autres caractéristiques et avantages de l'invention ressortiront à la lecture de la description qui suit, en référence aux figures annexées, qui illustrent :
[Fig. 1] : une vue en coupe d'une partie haute d'une jambe de suspension de véhicule automobile, et d'un assemblage de butée supérieure de suspension de cette jambe de suspension, selon un premier mode de réalisation ;
[Fig. 2] : une vue en perspective isométrique de l'assemblage de la figure 1 ;
[Fig. 3] : une vue en perspective isométrique et en éclaté d'une partie haute d'une jambe de suspension de véhicule automobile, et de l'assemblage de butée supérieure de suspension de cette jambe de suspension selon un deuxième mode de réalisation ;
[Fig. 4] : une vue en coupe de la partie haute de la jambe de suspension de véhicule automobile, et de l'assemblage de butée supérieure de suspension de cette jambe de suspension selon ce deuxième mode de réalisation ;
[Fig. 5] : une vue en coupe d'une perspective isométrique de l'assemblage de butée supérieure de suspension de cette jambe de suspension selon ce deuxième mode de réalisation avant fixation du support inférieur avec le couvercle ;
[Fig. 6] : une vue en coupe d'une perspective isométrique de l'assemblage de butée supérieure de suspension de cette jambe de suspension selon ce deuxième mode de réalisation où des rabats de fixation du support inférieur traversent des orifices de fixation associés du couvercle en position libre, avant sertissage ;
[Fig. 7] : une vue en coupe d'une perspective isométrique de l'assemblage de butée supérieure de suspension de cette jambe de suspension selon ce deuxième mode de réalisation où les rabats de fixation sont sertis contre le couvercle du côté du couvercle opposé au bloc filtrant pour assurer la fixation du couvercle avec le support inférieur de bloc filtrant.;
[Fig. 8] : une vue du support inférieur selon ce deuxième mode de réalisation, avant sertissage des rabats de fixation ;
[Fig. 9]: une vue du support inférieur de la figure 8, après sertissage des rabats de fixation ;
[Fig. 10] : une vue d'une variante de réalisation d'un support inférieur convenant pour ce deuxième mode de réalisation, avant sertissage des rabats de fixation ;
[Fig. 11] : une vue du support inférieur de la figure 10, après sertissage des rabats de fixation.

Pour plus de clarté, les éléments identiques ou similaires sont repérés par des signes de référence identiques sur l'ensemble des figures.

### DESCRIPTION DÉTAILLÉE D'UN MODE DE RÉALISATION

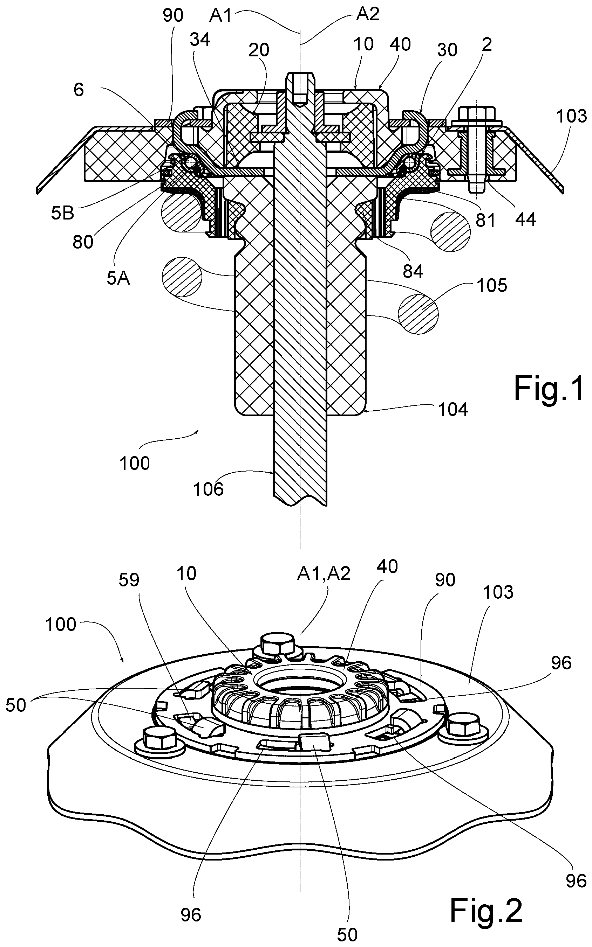

Sur la figure **1** est illustrée la partie haute d'une jambe de suspension, en appui sur un élément **103** de caisse de véhicule en forme ici de bol tronconique inversé. La jambe de suspension comporte un ressort hélicoïdal **105,** un amortisseur télescopique **106** situé à l'intérieur du ressort hélicoïdal **105,** et un assemblage **100** de butée supérieure de suspension, réalisant une interface entre la caisse **103** d'une part, et le ressort hélicoïdal **105** et l'amortisseur télescopique **106** d'autre part.

L'assemblage **100** de butée supérieure, également illustré sur la figure 2, comporte un palier **2** reposant sur un support de palier **80** annulaire s'appuyant sur un élément de filtration ressort lui-même s'appuyant sur la spire supérieure du ressort hélicoïdal **105,** et un tampon de choc **104.** L'assemblage **100** comprend une pièce d'accrochage, placée radialement à l'intérieur du support de palier **80,** cette pièce d'accrochage comportant une jupe intérieure **84** positionnée en outre radialement à l'intérieur du palier **2,** la jupe intérieure **84** comportant une forme d'accrochage pour une extrémité supérieure d'un soufflet de protection (non illustré) de l'amortisseur **106.**

L'assemblage **100** de butée supérieure comprend en outre un sous-ensemble filtrant **10** formant également un couvercle du palier **2,** le sous-ensemble filtrant **10** se composant d'un bloc filtrant **20** en matière élastomère situé radialement et axialement à l'intérieur du sous-ensemble filtrant **10,** d'un support inférieur **30** monobloc rigide du bloc filtrant **20,** le support **30** inférieur étant situé entre, en particulier ici interposé entre, le bloc filtrant **20** et le palier **2,** et d'un couvercle **40** de bloc filtrant **20.**

Le palier **2** a pour fonction de permettre à la spire supérieure du ressort hélicoïdal **105** de tourner lorsque le ressort hélicoïdal **105** se contracte et se détend, ou lorsque les roues sont braquées, en guidant le support de palier **80** en rotation autour d'un axe de rotation **A2.** Le palier **2** est ici un palier à roulement et comporte une rondelle inférieure **4** en tôle emboutie, une rondelle supérieure **5** en tôle emboutie définissant l'axe de rotation **A2** et des corps roulants **6,** en l'occurrence des billes, roulant sur des chemins de roulement **7, 8** formés sur les rondelles inférieure **4** et supérieure **5** pour guider la rondelle inférieure **4** en rotation par rapport à la rondelle supérieure **5** autour de l'axe de rotation **A2.** Le palier **2** à roulement est à contact oblique, et les corps roulants **6** sont en contact avec une zone radialement extérieure du chemin de roulement **8** de la rondelle supérieure **5** et avec une zone radialement intérieure du chemin de roulement **7** de la rondelle inférieure **4,** la zone intérieure étant radialement à l'intérieur de la zone extérieure, par rapport à l'axe de rotation **A2.** Les billes sont séparées et maintenues approximativement équidistantes à l'aide d'une cage **6'.**

La jambe de suspension est orientée de telle manière que l'assemblage **100** est situé globalement « sous » la caisse **103** et le ressort hélicoïdal **105** est situé au moins partiellement « sous » l'assemblage **100.**

Le support de palier **80** annulaire peut être réalisé par exemple en matière plastique, ou en alliage métallique, par exemple en aluminium injecté sous pression, avec ou sans insert de renfort, et forme une face d'appui annulaire plane tournée, axialement par rapport à l'axe de rotation **A2,** à l'opposé du palier **2,** ainsi qu'une face cylindrique de guidage tournée radialement vers l'extérieur.

Le support **30** de bloc filtrant et le support de palier **80** délimitent ensemble un volume annulaire confiné pour le palier **2.** Le couvercle **40** de bloc filtrant lui-même forme une jupe extérieure de protection **49** située radialement à l'extérieur et au moins partiellement en regard d'une face périphérique extérieure **82** du support de palier **80.**

Le bloc filtrant **20** est formé en matière élastomère et s'étend suivant un axe de référence **A1,** le bloc filtrant **20** présentant une interface de solidarisation **21** d'une extrémité d'une tige **102** d'amortisseur **106** télescopique de la jambe de suspension, qui traverse une lumière formée dans le tampon de choc **104** et un passage **33** du support **30.**

Le support **30** de bloc filtrant peut être réalisé en alliage métallique, par exemple en acier ou aluminium injecté sous pression, et de préférence d'un seul tenant, c'est-à-dire monobloc. De préférence, le support **30** est formé en acier, à partir d'une tôle emboutie. Le support **30** de bloc filtrant comprend une paroi **34** présentant une face supérieure **35** tournée vers le bloc filtrant et une face inférieure **36** opposée, d'appui pour un tampon de choc **104** de la suspension. Plus précisément, le support **30** de bloc filtrant présente une portion centrale **31** annulaire en appui contre une face inférieure **22** du bloc filtrant **20** et traversée axialement par le passage **33** pour l'extrémité de la tige **102** d'amortisseur **106,** le support inférieur **30** présentant une portion périphérique **32** annulaire entourant la portion centrale **31** annulaire.

Dans ce mode de réalisation, le support **30** monobloc rigide du bloc filtrant **20** est constitué par une tôle emboutie qui forme une cuvette de logement du bloc filtrant **20,** disposée radialement à l'intérieur du palier **2,** en contact radial avec ledit palier **2,** et une collerette entourant la cuvette, posée sur le palier **2.** Plus précisément, le support inférieur **30** de bloc filtrant présente une jupe cylindrique **39A** configurée pour venir se loger de façon ajustée avec une portion cylindrique **5A** du palier **2** de l'assemblage **100** et un épaulement transversal **39B** extérieur pour venir en appui contre une face supérieure **5B** dudit palier **2** de sorte que le sous-ensemble filtrant **10** est en appui direct contre le palier **2.**

La jupe cylindrique **39A** et l'épaulement transversal **39B** extérieur sont portés par une portion annulaire intermédiaire **312** reliant la portion centrale **31** annulaire et la portion périphérique **32** annulaire entre elles, la jupe cylindrique **39A** formant une portion cylindrique de centrage et l'épaulement transversal **39B** formant une portion plane d'appui direct ou indirect pour le palier **2.**

La cuvette de logement du bloc filtrant **20,** présente un fond **35** constituant une paroi intermédiaire entre le bloc filtrant **20** et le tampon de choc **104.** Une face inférieure de cette paroi intermédiaire constitue un appui pour le tampon de choc **104** de la suspension. La face supérieure de la paroi intermédiaire est quant à elle en contact avec le bloc filtrant **20,** le fond **35** recevant le bloc filtrant **20** en appui axial contre une face inférieure **22** dudit bloc filtrant **20.**

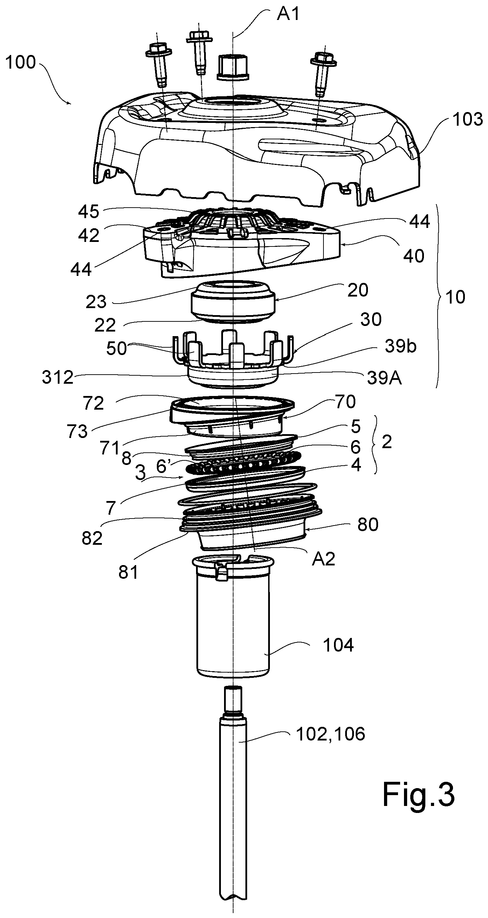

Le support **30** de bloc filtrant, en particulier ici la tôle constituant le support **30** monobloc rigide est annulaire et le fond **35** de la cuvette présente une ouverture circulaire formant le passage **33** pour l'extrémité de la tige **102** de l'amortisseur **106** télescopique. Le support **30** de bloc filtrant présente une symétrie de révolution autour de l'axe de référence **A1** qui correspond également à un axe de référence pour l'amortisseur **106** télescopique dans sa position de référence, le tampon de choc **104** et le bloc filtrant **20.** Cet axe de symétrie **A1** est ici parallèle, et confondu, avec l'axe de rotation **A2** du palier **2,** bien que d'autres configurations soient envisageables, notamment une configuration dans laquelle l'axe de référence **A1** est sécant avec l'axe de rotation **A2** du palier **2** (voir par exemple le mode de réalisation illustré en référence à la figure 3).

Le couvercle **40** de bloc filtrant permet de comprimer le bloc filtrant **20** au plus tard au moment du montage sur le véhicule, de sorte que le bloc filtrant **20** est en précharge entre le support inférieur **30** et le couvercle **40** de bloc filtrant. Le couvercle **40** peut être réalisé par exemple en matière plastique, rigide, le cas échéant avec des renforts ou inserts. Le couvercle **40** de bloc filtrant comporte une portion centrale **41** en appui contre une face supérieure **23** du bloc filtrant **20,** et une portion périphérique **42** entourant la portion centrale **41** et en appui contre la portion périphérique **32** annulaire du support inférieur **30.** Le couvercle **40** de bloc filtrant présente en outre une jupe extérieure de protection **49** située radialement à l'extérieur et au moins partiellement en regard d'une face périphérique extérieure **82** du support de palier **80** pour délimiter un chicanage **83** d'étanchéité afin de protéger le palier **2.**

Une fixation entre le couvercle **40** et le support **30** est assurée par des moyens de fixation assurant la fixation du couvercle **40** avec le support inférieur **30** de bloc filtrant. Dans ce premier mode de réalisation, les moyens de fixation pour assurer la fixation du couvercle **40** avec le support inférieur **30** de bloc filtrant comprennent des rabats **50** de fixation solidaires du support inférieur **30** en faisant saillie de la portion périphérique **32** annulaire du support inférieur **30.** Ces rabats **50** sont distribués, et de préférence équirépartis, sur la portion périphérique **32** annulaire du support **30** et se comptent au nombre de six. Ces rabats **50** ont chacun la forme d'un crochet et sont configurés pour pénétrer en position de fixation dans des orifices de fixation **60** du couvercle **40.** Ces orifices de fixation **60** sont situés sur la portion périphérique **42** du couvercle **40** et associés au rabat **50** de fixation du support inférieur **30.** Plus précisément, en position de fixation ces orifices de fixation **60** sont traversés par une portion proximale **51** du rabat **50** de fixation associé suivant une direction axiale. Chaque rabat **50** présente en outre une portion distale **52** du rabat **50** de fixation associé s'étendant au moins suivant une composante perpendiculaire à la direction axiale et qui vient se placer en recouvrement avec une surface d'appui d'un côté du couvercle **40** opposé à la portion périphérique **32** du support inférieur **30** pour assurer, malgré un effort de précharge du bloc filtrant **20,** la fixation du couvercle **40** avec le support inférieur **30** de bloc filtrant.

Le sous-ensemble filtrant **10** comporte en outre une rondelle de verrouillage **90.** Cette rondelle de verrouillage **90** est ici métallique, formée à partir d'une tôle emboutie. Dans une position d'assemblage, le couvercle **40** est situé axialement entre la rondelle de verrouillage **90** et le support inférieur **30,** des paires de rabats **50** et d'encoches **96** étant formés sur la rondelle de verrouillage **90** et le support inférieur **30.** Il est à noter que selon une variante non illustrée ici, il pourrait être obtenue une configuration dans laquelle le support inférieur **30** est situé axialement entre la rondelle de verrouillage **90** et le couvercle **40.**

La fixation du couvercle **40** avec le support inférieur **30** est assurée par la coopération des rabats **50** de fixation avec les encoches **96,** à la manière d'une fixation à baïonnette. En effet, l'assemblage du sous-ensemble filtrant **10** est assurée suivant une séquence mécanique de mouvements adaptés.

En particulier, le sous-ensemble filtrant **10** comporte une pluralité de rabats **50** de fixation configurés pour coopérer avec des encoches **96** associées. Chacun des rabats **50** de fixation est solidaire de l'un des éléments parmi la rondelle de verrouillage **90** et le deuxième élément tandis que les encoches **96** sont formées sur l'autre des éléments parmi la rondelle de verrouillage **90** et le deuxième élément De cette manière, la coopération de chacun des rabats **50** de fixation avec une encoche **96** associée permet l'assemblage des deux éléments l'un avec l'autre, le premier élément parmi le support inférieur **30** et le couvercle **40** étant interposé entre la rondelle de verrouillage **90** et le second élément parmi le support inférieur **30** et le couvercle **40.**

La coopération des rabats **50** de fixation avec les encoches **96** associées permet d'assurer au moins un blocage axial du sous-ensemble filtrant **10,** le blocage en rotation étant assuré par des moyens de blocage élastiques spécialement adaptés.

Dans ce mode de réalisation, chacun des rabats **50** de fixation est formé sur le support inférieur **30** et est associé à une des encoches **96,** formée sur la rondelle de verrouillage **90.** Le sous-ensemble filtrant **10** comporte donc autant de rabats **50** de fixation que d'encoches **96.**

Dans un premier temps, lors de l'assemblage, le couvercle **40** est positionné de sorte à être axialement entre la rondelle de verrouillage **90** et le support inférieur **30.** La rondelle de verrouillage **90** et le support inférieur **30** sont mobiles l'un par rapport à l'autre entre une position relative d'approche et une position relative d'interpénétration. Ce déplacement est obtenu par un mouvement relatif de translation entre la rondelle de verrouillage **90** et le support inférieur **30** suivant l'axe de référence **A1** de telle sorte que, dans la position relative d'interpénétration, chacun des rabats **50** de fixation pénètre dans l'encoche **96** associée.

Dans un second temps, pour finaliser l'assemblage et une fois la position relative d'interpénétration réalisée, la rondelle de verrouillage **90** et le support inférieur **30** sont mobiles l'un par rapport à l'autre entre la position relative d'interpénétration et une position relative d'assemblage. Ce déplacement est obtenu par un mouvement relatif de rotation entre la rondelle de verrouillage **90** et le support **30** inférieur de bloc filtrant autour de l'axe de référence **A1** de façon telle que dans la position relative d'assemblage, chacun des rabats **50** de fixation est logé dans un prolongement circonférentiel de l'encoche **96** associée et s'y trouve retenu axialement en appui axial contre un rebord de l'encoche associée.

Les encoches **96** peuvent prendre des formes variées. Toutefois, elles présentent chacune une première partie **961** s'étendant parallèlement à l'axe de référence **A1** et dont l'ouverture est configurée dans son dimensionnement pour être traversée par un gabarit axial du rabat **50** de fixation associé, et une seconde partie **962** de l'encoche **96** s'étendant circonférentiellement par rapport à l'axe de référence **A1** du sous-ensemble filtrant **10** depuis la première partie **961.**

Lors du déplacement de la position relative d'approche à la position relative d'interpénétration, la portion distale **52** de chaque rabat **50** formant une tête de crochet est déplacée axialement à travers un orifice de fixation **60** associé au rabat **50** de fixation du support inférieur **30** puis à travers la première partie **961** associée de chacune des encoches **96.** Dans la position d'interpénétration, la partie proximale **51** de chaque rabat **50** de fixation formant une base de crochet est placée à travers la première partie **961** associée de chacune des encoches **96.**

Ensuite, lors du déplacement de la position relative d'interpénétration à la position relative d'assemblage, la portion proximale **51** de chaque rabat **50** est déplacée en rotation et vient se loger dans le prolongement circonférentiel 962 de de l'encoche **96** associée de section transversale réduite par rapport au gabarit de chaque rabat **50** de fixation et notamment au gabarit de chaque portion distale **52** associée. La section réduite du prolongement circonférentiel formant deuxième partie **962** de l'encoche **96** par rapport à la première partie **961** offre une prise axiale pour la portion distale **52** du rabat **50** de fixation associé. De cette manière, en position relative d'assemblage, la portion distale **52** de chaque rabat **50** de fixation associé s'étend au moins suivant une composante perpendiculaire à la direction axiale et vient en recouvrement avec une surface d'appui associée du côté du couvercle **40** opposé à la portion périphérique **32** du support inférieur **30.**

La surface d'appui est ici portée par la rondelle de verrouillage **90** de sorte que chaque rabat **50** de fixation est retenu axialement par la rondelle de verrouillage **90** en position relative d'assemblage assurant ainsi la fixation du couvercle **40** avec le support inférieur **30** de bloc filtrant.

Bien entendu, les orifices de fixation **60** du couvercle **40** sont dimensionnés pour ne pas contraindre ce mouvement de rotation lors du déplacement du sous-ensemble filtrant **10** de la position relative d'interpénétration à la position relative d'assemblage, la portion périphérique **42** du couvercle **40** portant les orifices de fixation **60** étant située axialement entre la portion périphérique **32** annulaire du support inférieur **30** et la rondelle de verrouillage **90.**

Le sous-ensemble filtrant 10 comprend en outre des moyens de blocage **59** en rotation de la position relative d'assemblage de sorte à éviter une rotation inverse. Dans ce mode de réalisation, les moyens de blocage **59** en rotations sont solidaires de la pièce ne portant pas les rabats **50** de fixation, à savoir le couvercle **40.**

Ces moyens de blocage **59** en rotation comprennent au moins une lamelle élastique, de préférence une pluralité de lamelle élastique, et de préférence autant de lamelles élastiques que de rabats **50** de fixation.

Chacune des lamelles élastiques est positionnée adjacente circonférentiellement à un des rabats **50** de fixation, et s'étend d'une base vers une tête de lamelle s'étendant circonférentiellement et suivant une composante axiale de sorte à être saillante axialement, du côté du rabat **50** associé. En même temps que le rabat pénètre axialement dans l'orifice **60** de fixation du couvercle **40** puis dans les encoches **96,** chaque lamelle associée se prolongeant circonférentiellement depuis un bord circonférentiel dudit orifice **60** de fixation correspondant pénètre aussi dans l'encoche **96** associée de sorte à former un obstacle à la rotation de la rondelle de verrouillage **90** lorsqu'elle est en position relative d'assemblage. Les lamelles sont formées par emboutissage.

En position d'interpénétration, chaque rabat **50** pénètre dans la première partie **961** de l'encoche **96** associée, la lamelle élastique étant contrainte en appui contre une surface inférieure de la rondelle de verrouillage **90.** Lors du mouvement de rotation autour de l'axe de référence **A1** de la position d'interpénétration à la position relative d'assemblage la portion proximale **51** de chaque rabat **50** est déplacée en rotation et vient se loger dans la deuxième partie **962** de l'encoche **96** libérant dans la première partie **961** de l'encoche **96** une surface dans laquelle la lamelle élastique vient en regard en position relative d'assemblage et dont le relâchement élastique vient placer la lamelle correspondante dans l'espace délimité par la première partie **961** de l'encoche **96.** Dans cette position, les têtes de chaque lamelle **59** de blocage font obstacle dans les encoches **96** associées et se placent chacune dans l'épaisseur de la rondelle de verrouillage **90** bloquant toute rotation qui tendrait à la déplacer de la position relative d'assemblage à la position d'interpénétration.

Lors du procédé d'assemblage, pendant l'étape de passage de la position relative d'approche à la position relative d'interpénétration, la translation du couvercle **40** et du support **30** est telle que les pièces se rapprochent, le bloc filtrant **20** étant situé entre ces deux pièces. C'est lors de cette étape que l'on amène le bloc filtrant **20** en compression par le couvercle **40** et le support **30** inférieur, de sorte que le bloc filtrant **20** est mis en précharge entre le support inférieur **30** et le couvercle **40** de bloc filtrant. La rotation relative du couvercle **40** et du support **30** inférieur lors du déplacement de la position relative d'interpénétration à la position relative d'assemblage permet alors de verrouiller axialement le sous-ensemble filtrant **10** et la position compressée du bloc filtrant **20** permettant d'assurer la précharge.

Ainsi, et de manière générale, le sous-ensemble filtrant comporte un premier élément parmi le support inférieur **30** et le couvercle **40** situé axialement entre la rondelle de verrouillage **90** et un second élément parmi le support inférieur **30** et le couvercle **40,** des rabats **50** et des encoches **96** étant formés sur la rondelle de verrouillage **90** et le deuxième élément, chacun des rabats **50** de fixation formé sur une pièce parmi la rondelle de verrouillage **90** et le deuxième élément étant associé à une des encoches **96,** formée sur une autre pièce parmi la rondelle de verrouillage **90** et le deuxième élément, le procédé d'assemblage du sous-ensemble filtrant **10** comportant au moins les étapes suivantes :
- le passage de la position relative d'approche à la position relative d'interpénétration par mouvement relatif de translation entre le premier et le deuxième élément suivant l'axe d'assemblage **A1** de manière à faire pénétrer des rabats de fixation **50** dans des encoches **96** associées, chacune des encoches **96** étant associée à l'un des éléments parmi le premier et le deuxième élément et à un des rabats **50** de fixation solidaire de l'autre des éléments parmi le premier et le deuxième élément,
- le passage de la position relative d'interpénétration et la position relative d'assemblage par mouvement relatif de rotation entre le premier et le deuxième élément autour de l'axe d'assemblage **A1** de façon à ce que dans la position relative d'assemblage, chacun des rabats de fixation **50** est logé dans un prolongement circonférentiel de l'encoche **96** associée par rapport à la position relative d'interpénétration et s'y trouve retenu axialement pour assurer la fixation du couvercle **40** avec le support inférieur **30** de bloc filtrant.

Dans le mode de réalisation illustré, le premier élément est le couvercle **40** et le deuxième élément est le support **30** inférieur. Toutefois, dans une variante non illustrée, le premier élément pourrait être le support **30,** et le deuxième élément serait le couvercle **40** de bloc filtrant. Dans ce cas, la portion annulaire **1031** de l'élément de caisse **103** du véhicule automobile est enserrée axialement entre la portion périphérique annulaire du couvercle **40,** et la rondelle de verrouillage **90.**

Dans d'autres variantes également non illustrées, les rabats **50** de fixation et les encoches **96** peuvent être réparties sur l'un et l'autre des premier et deuxième éléments.

Selon le mode de réalisation, l'assemblage final du sous-ensemble filtrant **10** est réalisé concomitamment avec la fixation dudit sous-ensemble filtrant **10** avec un élément de caisse **103.** Pour cela, un assemblage partiel du sous ensemble filtrant **10** est réalisé au préalable, et maintenu en place par une interférence radiale entre des surfaces périphériques externes des rabats **50** et des surfaces périphériques internes des orifices de fixation **60** du couvercle **40.**

La fixation entre le couvercle **40** et le support **30** est ici assurée de manière indépendante de celle du sous-ensemble filtrant **10** à l'élément de caisse **103** du véhicule automobile grâce à des ouvertures **44** de fixation disposées radialement à l'extérieur du palier **2,** et de préférence à l'extérieur du support inférieur **30** de bloc filtrant (au sens où dans un plan axial quelconque passant par l'une ouvertures **44** le support inférieur **30** est positionné entre l'axe de référence **A1** et l'ouverture **44** considérée).

Le couvercle **40** est adapté à la fixation de l'assemblage **100** de butée supérieure à la caisse **103** du véhicule. Il comporte à cet effet une pluralité d'interfaces de fixation distribuées sur un pourtour du couvercle **40,** au nombre de trois dans ce mode de réalisation mais qui peuvent être le cas échéant plus ou moins nombreuses. Chacune de ces interfaces de fixation comporte une ouverture **44,** qui dans ce mode de réalisation est un trou taraudé jouant le rôle fonctionnel d'un écrou configuré pour recevoir une vis de fixation, mais peut le cas échéant être un trou pour recevoir un autre moyen de fixation, tel qu'un rivet par exemple, ou un ensemble vis / écrou. Pour assurer la fixation rigide des vis de fixation, l'interface taraudée servant d'écrou est formée en métal par un insert rapporté localement au niveau de chaque ouverture **44** dans la matière plastique du couvercle **40.**

Les écrous formant les éléments de fixation sont dans ce mode de réalisation conformés en « T » pris dans la section, pour maximiser la tenue structurelle de l'écrou noyé dans la matière plastique du couvercle **40.** Alternativement, on peut envisager des éléments de fixation de différentes formes, par exemple parallélépipédiques.

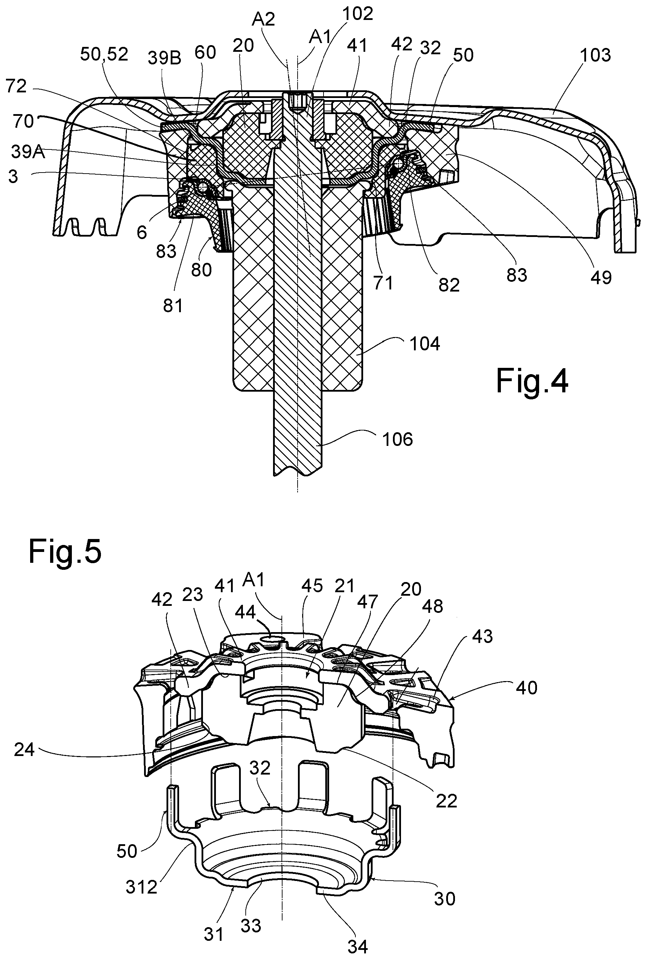

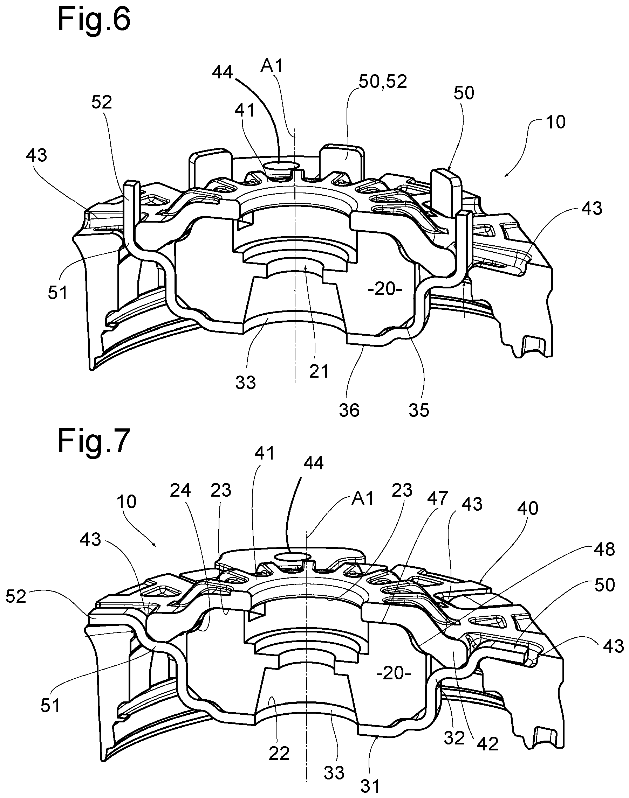

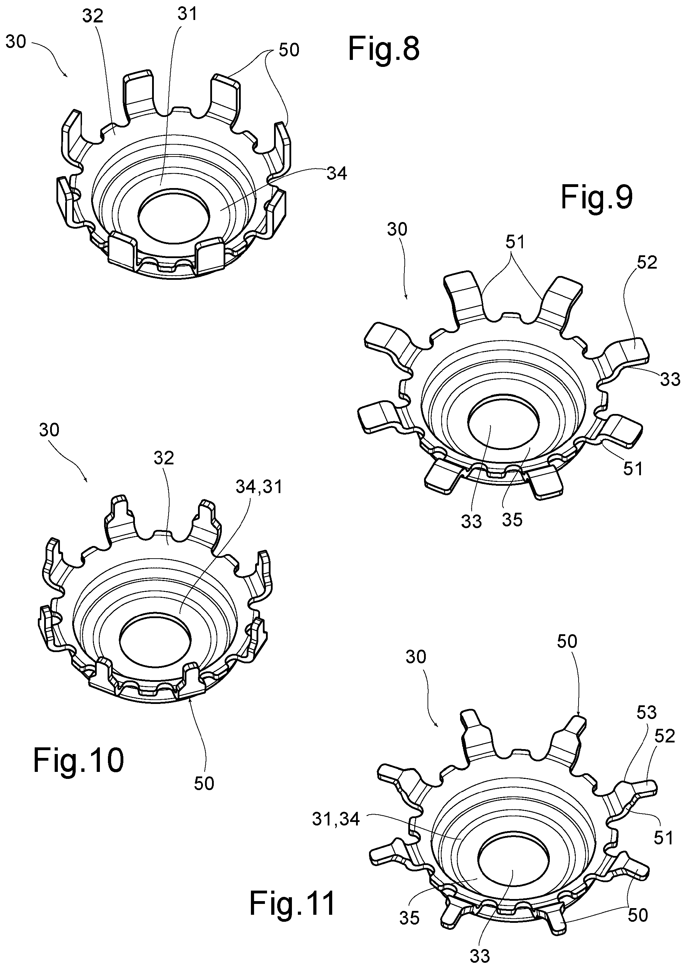

Les figures 3 à 11 illustrent un deuxième mode de réalisation. Ce deuxième mode de réalisation diffère du premier mode de réalisation essentiellement en ce que les rabats de fixation **50** ne sont plus prévus pour se fixer en suivant une séquence de mouvements particuliers, mais sont sertis contre le couvercle **40** du côté du couvercle **40** opposé au bloc filtrant **20** pour assurer la fixation du couvercle **40** avec le support inférieur **30** de bloc filtrant.

Dans ce mode de réalisation également, l'assemblage **100** de butée supérieure de la jambe de suspension de véhicule automobile, comporte, de la même manière, un palier **2** lisse ou à roulement définissant un axe de rotation **A2** et le sous-ensemble filtrant **10** en appui cette fois indirect contre le palier **2.**

En effet, dans ce deuxième mode de réalisation, l'assemblage **100** comporte une pièce de support intermédiaire **70,** rigide, en appui sur le palier **2** et formant un berceau de support supportant le sous-ensemble filtrant **10.** En particulier, le support inférieur **30** de bloc filtrant présente une jupe cylindrique **39A** configurée pour venir se loger de façon ajustée avec une portion cylindrique **72,** de la pièce de support intermédiaire **70** de l'assemblage **100** et un épaulement transversal **39B** extérieur pour venir en appui contre une face supérieure **73** de ladite pièce de support intermédiaire **70** de l'assemblage **100.**

La pièce de support intermédiaire **70** est réalisée de façon monobloc en matière plastique, de préférence sans insert métallique, est en appui sur la rondelle supérieure **5** du palier **2,** et sert d'appui pour le support **30** inférieur monobloc annulaire du bloc filtrant **20,** de sorte qu'elle définit le positionnement relatif de l'axe de symétrie de révolution **A1** du support inférieur **30** du sous-ensemble filtrant **10** de l'axe de rotation **A2** du palier **2.** De préférence, la face supérieure de la pièce de support intermédiaire **70** qui sert d'appui pour le support inférieur **30** du bloc filtrant **20,** et le cas échéant pour le couvercle **40** de bloc filtrant, est réalisée sans contre-dépouille pour permettre un démoulage axial, suivant le même axe de démoulage confondu avec l'axe de symétrie de révolution.

De même que les modes de réalisations précédents, l'assemblage **100** comporte le support de palier **80** annulaire formant une face d'appui **81** directe ou indirecte pour un ressort hélicoïdal **105** de la suspension, la face d'appui **81** étant tournée à l'opposé axialement du palier **2.**

Du fait de la présence de la pièce intermédiaire **70,** le volume annulaire **3** pour le palier **2** est délimité au moins en partie entre la pièce de support intermédiaire **70** et le support de palier **80.**

La pièce de support intermédiaire **70** comporte en outre une jupe intérieure **71** positionnée radialement à l'intérieur du palier **2,** la jupe intérieure **71** comportant de préférence une forme d'accrochage pour une extrémité supérieure du tampon de choc **104.**

Le sous-ensemble filtrant **10** comprend également des moyens de fixation assurant la fixation du couvercle **40** avec le support inférieur **30** de bloc filtrant.

Ces moyens de fixation comprennent toujours des rabats **50** de fixation mais obtenus ici par un procédé de sertissage.

Plus précisément, le sous-ensemble filtrant **10** comprend une pluralité de rabats **50** de fixation, huit dans le mode de réalisation illustré, répartis de façon homogène sur la portion périphérique **32** annulaire du support inférieur **30.** On notera que quel que soit le mode de réalisation, le nombre de ces rabats peur varier. Il est au moins de trois rabats **50,** de préférence au moins de six rabats **50,** et au plus douze rabats **50,** de préférence au plus dix rabats **50** de fixation. De cette manière on conserve un assemblage fiable et simple à fabriquer.

Chaque rabat **50** de fixation est serti contre le couvercle **40** du côté du couvercle **40** opposé au bloc filtrant **20** pour assurer la fixation du couvercle **40** avec le support inférieur **30** de bloc filtrant. Ainsi on obtient des rabats de fixation dont la portion distale **52** est coudée par rapport à la portion proximale **51,** ce coude étant formé par le sertissage.

Le couvercle **40** comporte, pour chaque rabat **50** de fixation, un logement **43** de rabat configuré pour loger complètement au moins la portion distale **52** du rabat **50** de fixation associé dans le couvercle **40** en position rabattue. Dans une configuration, le couvercle **40** de bloc filtrant présente une face supérieure d'appui **45** contre un élément de caisse **103** de véhicule, lequel vient recouvrir le couvercle **40** de bloc filtrant en prenant appui sur lui. Grâce aux logements **43** des rabats **50** de fixation, le support inférieur **30** de bloc filtrant reste en retrait par rapport à cette face supérieure d'appui **45.**

Le couvercle **40** de bloc filtrant comporte également une portion périphérique **42** pourvue d'ouvertures de fixation **44** positionnées radialement à l'extérieur du palier **2** et configurées pour fixer directement ou indirectement le sous-ensemble filtrant **10** à un élément de caisse **103** du véhicule automobile. Les ouvertures de fixation **44** sont indépendantes ici des orifices de fixation **60** associés aux rabats **50** de fixation du support inférieur **30.** Le bloc filtrant **20** est toujours ici en précharge entre le support inférieur **30** et le couvercle **40** de bloc filtrant.

La portion centrale **41** du couvercle **40** de bloc filtrant forme une cuvette avec un fond **47** en appui axial contre la face supérieure **23** du bloc filtrant **20** et une paroi latérale annulaire **48,** de préférence cylindrique, conique ou tronconique, vient le cas échéant en appui radial contre une face annulaire périphérique **24** du bloc filtrant **20.** Cet appui radial peut être localisé voire occasionnel et permet notamment un auto-centrage par rapport à l'axe de référence **A1.**

De façon similaire, le support **30** inférieur présente également une portion centrale annulaire **31** formant une cuvette avec un fond **35** en appui axial contre la face inférieure **22** du bloc filtrant **20** et une paroi latérale annulaire, de préférence cylindrique, en appui radial contre une face annulaire périphérique **24** du bloc filtrant **20.**

Ainsi, le procédé d'assemblage du sous-ensemble filtrant **10** comporte au moins les étapes suivantes :
- le passage de la position relative d'approche à la position relative d'interpénétration par mouvement relatif de translation entre le support **30** et le couvercle **40** suivant l'axe d'assemblage **A1** de manière à faire pénétrer des rabats de fixation **50** dans les orifices de fixation **60** associés du couvercle **40** en position libre, avant sertissage, dans laquelle les portions proximale **51** et distale **52** de chaque rabat de fixation **50** sont sensiblement alignées deux à deux suivant un axe parallèle à l'axe de référence
- le passage de la position relative d'interpénétration et la position relative d'assemblage par sertissage de chacun des rabats de fixation , chacune des portion distale **52** du rabat **50** de fixation associé venant se loger dans le logement **43** associé du couvercle **40** en y étant rabattu contre la surface d'appui portée par le couvercle **40,** le couvercle **40** se trouvant retenu axialement pour assurer la fixation du couvercle **40** avec le support inférieur **30** de bloc filtrant.

Naturellement, l'invention est décrite dans ce qui précède à titre d'exemple. Il est entendu que l'homme du métier est à même de réaliser différentes variantes de réalisation de l'invention sans pour autant sortir du cadre de l'invention.

La forme des encoches peut par exemple varier sans modifier sa fonction.

## Revendications

1. Assemblage (100) de butée supérieure d'une jambe de suspension de véhicule automobile, l'assemblage comportant : un palier (2) lisse ou à roulement et un sous-ensemble filtrant (10) en appui direct ou indirect contre le palier (2), le palier (2) définissant un axe de rotation (A2), le sous-ensemble filtrant (10) comportant :
- un support de palier (80) annulaire formant une face d'appui (81) pour un ressort hélicoïdal (105) de la suspension, la face d'appui (81) étant tournée à l'opposé du palier (2) ;
- un bloc filtrant (20) en matière élastomère, le bloc filtrant (20) s'étendant suivant un axe de référence (A1) et présentant une interface de solidarisation (21) d'une extrémité d'une tige (102) d'un amortisseur (106) de la jambe de suspension ;
- un support inférieur (30) de bloc filtrant situé entre le bloc filtrant (20) et le palier (2) et présentant une portion centrale (31) annulaire en appui contre une face inférieure (22) du bloc filtrant (10) et traversée axialement par un passage (33) pour l'extrémité de la tige (102) d'amortisseur (106), le support inférieur (30) de bloc filtrant présentant une portion périphérique (32) annulaire entourant la portion centrale (31) annulaire, le support inférieur (30) de bloc filtrant présentant en outre une face supérieure (35) tournée vers le bloc filtrant (20) et une face inférieure (36) opposée d'appui pour un tampon de choc (104) de la suspension ;
- un couvercle (40) de bloc filtrant comportant une portion centrale (41) en appui contre une face supérieure (23) du bloc filtrant (20), une portion périphérique (42) entourant la portion centrale (41) et en appui contre la portion périphérique (32) annulaire du support inférieur (30), la portion périphérique (42) du couvercle (40) étant pourvue d'ouvertures de fixation (44) disposées radialement à l'extérieur du palier (2) et configurées pour fixer le sous-ensemble filtrant (10) à un élément de caisse (103) du véhicule automobile, **caractérisé en ce que** le couvercle (40) de bloc filtrant forme une jupe extérieure de protection (49) située radialement à l'extérieur et au moins partiellement en regard d'une face périphérique extérieure (82) du support de palier (80) pour délimiter un chicanage (83) d'étanchéité ; et **en ce que** le sous-ensemble filtrant comporte de plus:
- des moyens de fixation assurant la fixation du couvercle (40) avec le support inférieur (30) de bloc filtrant indépendamment des ouvertures de fixation (44), le bloc filtrant étant en précharge entre le support inférieur (30) et le couvercle (40) de bloc filtrant.

2. Assemblage (100) de butée supérieure selon la revendication 1, **caractérisé en ce que** le support inférieur (30) de bloc filtrant présente :
- une jupe cylindrique (39A) configurée pour venir se loger de façon ajustée avec une portion cylindrique (72, 5A) d'une pièce de support intermédiaire (70) ou du palier (2) ; et
- un épaulement transversal (39B) extérieur pour venir en appui contre une face supérieure (73, 5B) de ladite pièce de support intermédiaire (70) ou du palier (2).

3. Assemblage (100) de butée supérieure selon la revendication 1 ou 2, **caractérisé en ce que** le support inférieur (30) de bloc filtrant est monobloc et métallique.

4. Assemblage (100) de butée supérieure selon l'une quelconque des revendications précédentes, **caractérisé en ce que** le couvercle (40) de bloc filtrant est en matériau(x) plastique(s), le cas échéant avec des renforts ou inserts.

5. Assemblage (100) de butée supérieure selon l'une quelconque des revendications précédentes, **caractérisé en ce que** les moyens de fixation pour assurer la fixation du couvercle (40) avec le support inférieur (30) de bloc filtrant comprennent :
- au moins un rabat (50) de fixation du support inférieur (30) faisant saillie de la portion périphérique (32) annulaire du support inférieur (30) ; et
- au moins un orifice de fixation (60) sur la portion périphérique (42) du couvercle (40) associé au rabat (50) de fixation du support inférieur (30) et traversé par une portion proximale (51) du rabat (50) de fixation associé suivant une direction axiale, une portion distale (52) du rabat (50) de fixation associé s'étendant au moins suivant une composante perpendiculaire à la direction axiale en recouvrement avec une surface d'appui d'un côté du couvercle (40) opposé axialement à la portion périphérique (32) du support inférieur (30) pour assurer la fixation du couvercle (40) avec le support inférieur (30) de bloc filtrant.

6. Assemblage (100) de butée supérieure selon l'une quelconque des revendications précédentes, **caractérisé en ce que** les moyens de fixation pour assurer la fixation du couvercle (40) avec le support inférieur (30) de bloc filtrant comprennent au moins une fixation par filetage.

7. Assemblage (100) de butée supérieure selon l'une quelconque des revendications précédentes, **caractérisé en ce que** la portion périphérique (42) entoure le support inférieur (30).

8. Assemblage (100) de butée supérieure selon l'une quelconque des revendications précédentes, **caractérisé en ce qu'**il comporte une pièce de support intermédiaire (70) rigide en appui sur le palier (2) et formant un berceau de support supportant le sous-ensemble filtrant (10).

9. Assemblage (100) de butée supérieure selon la revendication 8, **caractérisé en ce que** la pièce de support intermédiaire (70) et le support de palier (80) délimitent ensemble au moins en partie un volume annulaire (3) pour le palier (2).

10. Assemblage (100) de butée supérieure selon l'une quelconque des revendications précédentes, **caractérisé en ce que** le chicanage (83) assure un accrochage élastique de cohésion entre le support de palier (80) et le couvercle (40) avant montage sur l'élément de caisse (103) du véhicule automobile.

11. Assemblage (100) de butée supérieure selon la revendication 8 ou 9, ou la revendication 10 dépendant au moins de la revendication 8, **caractérisé en ce que** la pièce de support intermédiaire (70) ou le support de palier (80) comporte une jupe intérieure (71, 84) positionnée radialement à l'intérieur du palier (2), la jupe intérieure (71, 84) comportant de préférence une forme d'accrochage pour une extrémité supérieure du tampon de choc (104).

12. Jambe de suspension pour un véhicule automobile, comportant un ressort hélicoïdal (105), un amortisseur télescopique (106), et un tampon de choc (104), **caractérisée en ce qu'**elle comporte en outre un assemblage (100) de butée supérieure selon l'une quelconque des revendications précédentes.

## Patentansprüche

1. Stützlagerbaugruppe (100) eines Motorfahrzeugfederbeins, die Baugruppe umfassend: ein Gleit- oder Wälzlager (2) und eine Filterunterbaugruppe (10) in direkter oder indirekter Anlage gegen das Lager (2), wobei das Lager (2) eine Drehachse (A2) definiert, die Filterunterbaugruppe (10) umfassend:
- einen ringförmigen Lagerträger (80), der eine Passfläche (81) für eine Schraubenfeder (105) der Federung ausbildet, wobei die Passfläche (81) von dem Lager (2) abgewandt ist
- einen Filterblock (20) aus elastomerem Material, wobei sich der Filterblock (20) entlang einer Referenzachse (A1) erstreckt und eine Schnittstelle zum Fixieren (21) eines Endes einer Stange (102) eines Dämpfers (106) des Federbeins aufweist;
- einen unteren Filterblockträger (30), der sich zwischen dem Filterblock (20) und dem Lager (2) befindet und einen ringförmigen Mittelabschnitt (31) aufweist, der an einer unteren Fläche (22) des Filterblocks (10) anliegt und axial von einem Durchgang (33) für das Ende der Stange (102) des Dämpfers (106) durchquert wird, wobei der untere Filterblockträger (30) einen ringförmigen Umfangsabschnitt (32) aufweist, der den Mittelabschnitt (31) umgibt, wobei der untere Filterblockträger (30) ferner eine dem Filterblock (20) zugewandte obere Fläche (35) und eine gegenüberliegende untere Fläche (36) für ein Stoßpolster (104) der Federung aufweist;
- eine Filterblockabdeckung (40), umfassend einen Mittelabschnitt (41), der an einer oberen Fläche (23) des Filterblocks (20) anliegt, einen Umfangsabschnitt (42), der den Mittelabschnitt (41) umgibt und an dem ringförmigen Umfangsabschnitt (32) des unteren Trägers (30) anliegt, wobei der Umfangsabschnitt (42) der Abdeckung (40) mit Befestigungsöffnungen (44) versehen ist, die radial außerhalb des Lagers (2) angeordnet und konfiguriert sind, um die Filterunterbaugruppe (10) an einem Karosserieelement (103) des Motorfahrzeugs zu befestigen;
**dadurch gekennzeichnet, dass** die Filterblockabdeckung (40) eine äußere Schutzschürze (49) ausbildet, die radial außerhalb und mindestens teilweise gegenüber einer äußeren Umfangsfläche (82) des Lagerträgers (80) angeordnet ist, um einen Dichtungszickzack (83) zu begrenzen und dadurch, dass die Filterunterbaugruppe (10) ferner folgendes umfasst:
- Befestigungsmittel, die die Abdeckung (40) an dem unteren Filterblockträger (30) unabhängig von den Befestigungsöffnungen (44) fixieren, wobei der Filterblock zwischen dem unteren Träger (30) und der Filterblockabdeckung (40) vorgespannt ist.

2. Stützlagerbaugruppe (100) nach Anspruch 1,
**dadurch gekennzeichnet, dass** der untere Filterblockträger (30) Folgendes aufweist:
- eine zylindrische Schürze (39A), die konfiguriert ist, um in angepasster Weise mit einem Zylinderabschnitt (72, 5A) eines Zwischenträgerteils (70) oder des Lagers (2) zusammengefügt zu werden; und
- eine äußere Querschulter (39B), um an einer oberen Fläche (73, 5B) des Zwischenträgerstücks (70) oder des Lagers (2) anzuliegen.

3. Stützlagerbaugruppe (100) nach Anspruch 1 oder 2,
**dadurch gekennzeichnet, dass** der untere Filterblockträger (30) aus einem einzigen Metallstück hergestellt ist.

4. Stützlagerbaugruppe (100) nach einem der vorstehenden Ansprüche, **dadurch gekennzeichnet, dass** die Filterblockabdeckung (40) aus Kunststoffmaterial(ien), gegebenenfalls mit Verstärkungen oder Einsätzen, hergestellt ist.

5. Stützlagerbaugruppe (100) nach einem der vorstehenden Ansprüche, **dadurch gekennzeichnet, dass** die Befestigungsmittel zum Fixieren der Abdeckung (40) mit dem unteren Filterblockträger (30) Folgendes umfassen:
- mindestens eine Klappe (50) zum Befestigen des unteren Trägers (30), die von dem ringförmigen Umfangsabschnitt (32) des unteren Trägers (30) vorsteht; und
- mindestens eine Befestigungsöffnung (60) an dem Umfangsabschnitt (42) der Abdeckung (40), die der Befestigungsklappe (50) des unteren Trägers (30) zugeordnet ist und von einem proximalen Abschnitt (51) der zugeordneten Befestigungsklappe (50) in axialer Richtung gekreuzt wird, wobei sich ein distaler Abschnitt (52) der zugeordneten Befestigungsklappe (50) mindestens entlang einer Komponente senkrecht der axialen Richtung erstreckt und mit einer Passfläche auf einer Seite der Abdeckung (40) gegenüber dem Umfangsabschnitt (32) des unteren Trägers (30) überlappt, um das Befestigen der Abdeckung (40) an dem unteren Trägerblockträger (30) sicherzustellen.

6. Stützlagerbaugruppe (100) nach einem der vorstehenden Ansprüche, **dadurch gekennzeichnet, dass** die Befestigungsmittel zum Fixieren der Abdeckung (40) mit dem unteren Filterblockträger (30) mindestens eine Befestigung pro Gewinde umfassen.

7. Stützlagerbaugruppe (100) nach einem der vorstehenden Ansprüche, **dadurch gekennzeichnet, dass** der Umfangsabschnitt (42) den unteren Träger (30) umgibt.

8. Stützlagerbaugruppe (100) nach einem der vorstehenden Ansprüche, **dadurch gekennzeichnet, dass** sie ein starres Zwischenträgerteil (70) umfasst, das an dem Lager (2) anliegt und ein Trägergestell ausbildet, das die Filterunterbaugruppe (10) trägt.

9. Stützlagerbaugruppe (100) nach Anspruch 8,
**dadurch gekennzeichnet, dass** das Zwischenträgerteil (70) und der Lagerträger (80) mindestens teilweise einen ringförmigen Raum (3) für das Lager (2) begrenzen.

10. Stützlagerbaugruppe (100) nach einem der vorstehenden Ansprüche, **dadurch gekennzeichnet, dass** das Ablenkblech (83) eine elastische Kohäsionsbindung zwischen dem Lagerträger (80) und der Abdeckung (40) vor dem Montieren an dem Karosserieelement (103) des Motorfahrzeugs bereitstellt.

11. Stützlagerbaugruppe (100) nach Anspruch 8 oder 9, oder Anspruch 10 abhängend zumindest von Anspruch 8,, **dadurch gekennzeichnet, dass** das Zwischenträgerteil (70) oder der Lagerträger (80) eine innere Schürze (71, 84) umfasst, die radial innerhalb des Lagers (2) positioniert ist, wobei die innere Schürze (71, 84) vorzugsweise eine Hakenform für ein oberes Ende des Stoßpolsters (104) umfasst.

12. Federbein für ein Motorfahrzeug, umfassend eine Schraubenfeder (105), einen Teleskopdämpfer (106) und ein Stoßpolster (104),
**dadurch gekennzeichnet, dass** es ferner eine Stützlagerbaugruppe (100) nach einem der vorstehenden Ansprüche umfasst.

## Claims

1. A top mount assembly (100) of a motor vehicle suspension strut, the assembly comprising: a sliding or rolling bearing (2) and a filtering sub-assembly (10) in direct or indirect abutment against the bearing (2), the bearing (2) defining an axis of rotation (A2), the filtering sub-assembly (10) comprising:
- an annular bearing support (80) forming a mating face (81) for a coil spring (105) of the suspension, the mating face (81) facing away from the bearing (2);
- a filter block (20) made of elastomeric material, the filter block (20) extending along a reference axis (A1) and having an interface for securing (21) one end of a rod (102) of a damper (106) of the suspension strut;
- a filter block lower support (30) located between the filter block (20) and the bearing (2) and having an annular central portion (31) abutting a lower face (22) of the filter block (10) and traversed axially by a passage (33) for the end of the rod (102) of the damper (106), the filter block lower support (30) having an annular peripheral portion (32) surrounding the central portion (31), the filter block lower support (30) further having an upper face (35) facing the filter block (20) and an opposing lower face (36) for a shock pad (104) of the suspension;
- a filter block cover (40) comprising a central portion (41) abutting an upper face (23) of the filter block (20), a peripheral portion (42) surrounding the central portion (41) and abutting the annular peripheral portion (32) of the lower support (30), the peripheral portion (42) of the cover (40) being provided with fastening openings (44) arranged radially outside the bearing (2) and configured to fasten the filtering sub-assembly (10) to a body element (103) of the motor vehicle,
**characterized in that** the filter block cover (40) forms an outer protective skirt (49) located radially outside and at least partially opposite an outer peripheral face (82) of the bearing support (80) to delimit a sealing zigzag (83); and **in that** the filtering sub-assembly further comprises:
- fastening means that secure the cover (40) to the filter block lower support (30) independently of the fastening openings (44), the filter block being pre-stressed between the lower support (30) and the filter block cover (40).

2. The top mount assembly (100) according to claim 1, **characterized in that** the filter block lower support (30) has:
- a cylindrical skirt (39A) configured to be fitted in an adjusted manner with a cylindrical portion (72, 5A) of an intermediate support part (70) or the bearing (2); and
- an outer transverse shoulder (39B) to abut an upper face (73, 5B) of said intermediate support piece (70) or the bearing (2).

3. The top mount assembly (100) according to claim 1 or 2, **characterized in that** the filter block lower support (30) is made of a single piece of metal.

4. The top mount assembly (100) according to any one of the preceding claims, **characterized in that** the filter block cover (40) is made of plastic material(s), where appropriate with reinforcements or inserts.

5. The top mount assembly (100) according to any one of the preceding claims, **characterized in that** the fastening means for securing the cover (40) with the filter block lower support (30) comprise:
- at least one flap (50) for fastening the lower support (30) protruding from the annular peripheral portion (32) of the lower support (30); and
- at least one fastening orifice (60) on the peripheral portion (42) of the cover (40) associated with the fastening flap (50) of the lower support (30) and crossed by a proximal portion (51) of the associated fastening flap (50) in an axial direction, a distal portion (52) of the associated fastening flap (50) extending at least along a component perpendicular to the axial direction overlapping with a mating surface on one side of the cover (40) opposite the peripheral portion (32) of the lower support (30) to ensure the fastening of the cover (40) with the lower support block support (30).

6. The top mount assembly (100) according to any one of the preceding claims, **characterized in that** the fastening means for securing the cover (40) with the filter block lower support (30) comprise at least one fastening per threading.

7. The top mount assembly (100) according to any one of the preceding claims, **characterized in that** the peripheral portion (42) surrounds the lower support (30).

8. The top mount assembly (100) according to any one of the preceding claims, **characterized in that** it comprises a rigid intermediate support part (70) abutting the bearing (2) and forming a support cradle supporting the filtering sub-assembly (10).

9. The top mount assembly (100) according to claim 8, **characterized in that** it further comprises the intermediate support part (70) and the bearing support (80) delimit at least partly an annular volume (3) for the bearing (2).

10. The top mount assembly (100) according any one of the preceding claims, **characterized in that** the baffle (83) provides a resilient attachment of cohesion between the bearing support (80) and the cover (40) before mounting on the body element (103) of the motor vehicle.

11. The top mount assembly (100) according to claim 8 or 9, or claim 10 as dependent on at least claim 8, **characterized in that** the intermediate support part (70) or the bearing support (80) comprises an inner skirt (71, 84) positioned radially inside the bearing (2), the inner skirt (71, 84) preferably comprising a hooking shape for an upper end of the shock pad (104).

12. A suspension strut for a motor vehicle, comprising a coil spring (105), a telescopic damper (106), and a shock pad (104), **characterized in that** it further comprises a top mount assembly (100) according to any one of the preceding claims.
